(19) **Europäisches Patentamt / European Patent Office / Office européen des brevets**

(11) **EP 1 168 700 B1**

(12) **EUROPEAN PATENT SPECIFICATION**

(45) Date of publication and mention
of the grant of the patent:
**09.05.2007 Bulletin 2007/19**

(51) Int Cl.:
*H04L 1/00* *(2006.01)*    *H04L 27/00* *(2006.01)*

(21) Application number: **01113861.7**

(22) Date of filing: **07.06.2001**

(54) **Signalling of modulation type in adaptive modulation systems**

Signalisierung der Modulationsart in adaptiven Modulationssystemen

Signalisation du type de modulation dans des systèmes de modulation adaptatifs

(84) Designated Contracting States:
**AT BE CH CY DE DK ES FI FR GB GR IE IT LI LU MC NL PT SE TR**

(30) Priority: **27.06.2000 IT MI001441**

(43) Date of publication of application:
**02.01.2002 Bulletin 2002/01**

(73) Proprietor: **Siemens S.p.A.**
**20126 Milano (IT)**

(72) Inventors:
• **Santacesaria, Claudio**
**20139 Milano (IT)**
• **Gaspare, Licitra**
**20064 Gorgonzola (IT)**

(74) Representative: **Berg, Peter et al**
**Siemens AG**
**Postfach 22 16 34**
**80506 München (DE)**

(56) References cited:
EP-A- 0 727 885    US-A- 5 289 476
US-A- 5 561 468    US-A- 6 005 896

• **OTSUKI S ET AL: "PERFORMANCE OF MODULATION-LEVEL-CONTROLLED ADAPTIVE MODULATION SYSTEMS" ELECTRONICS & COMMUNICATIONS IN JAPAN, PART I - COMMUNICATIONS, SCRIPTA TECHNICA. NEW YORK, US, vol. 79, no. 7, 1 July 1996 (1996-07-01), pages 81-93, XP000696376 ISSN: 8756-6621**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates in general to telecommunication systems and more in particular, to a data transmission method in an adaptive modulation system.

BACKGROUND OF THE INVENTION

Adaptive modulation is a recently conceived technique consisting in transmitting data coded according to different modulations. These modulations are selected in such a way that transmissions from and/or to destination stations, connected through a channel having good transmission characteristics, are made with a comparatively large number of bits per symbol (multilevel modulation), while transmissions from and/or to stations connected through channels having comparatively worse characteristics, are made with a minimum number of bits per symbol (basic modulation).

Considering that the characteristics of said channels could change in time, also the modulation type used to communicate with a given station can change accordingly.

Multilevel modulation are particularly convenient in terms of quantity of information per transmitted symbol, since the information associated to each symbol is as high as higher is the number of the different symbols that we can transmit. On the other hand, at equal transmission power, multilevel modulations can be conveniently exploited only if the channel shows characteristics of relatively limited attenuation and interference.

On the basis of the channel characteristics, with the adaptive modulation it is possible to adapt the modulation level using a multilevel modulation (for instance 16QAM or 64QAM) if channel attenuation and interference are comparatively limited (this can occur for instance if the destination station is close), or a more robust modulation (for instance QPSK or 4QAM) if channel attenuation and interference are higher (for instance: far destination station).

A problem of crucial importance in adaptive modulation, made more complex by the application to point-to-multipoint systems, is time-division transmission of data having different modulations, selected time by time according to the particular dislocation of the destination station (distance, presence of possible obstacles etc.), to the type of transported information and to channel conditions, enabling the receiver to correctly identify the employed modulation.

Data are generally organised in packets ("bursts") consisting of a preamble followed by a set of data bits (also called "payload", information field or useful data). The preamble enables the demodulator to identify the starting of a new packet, to obtain the transmission clock and to recognise, in the phase vector plane, the position of some reference symbols (points of the transmission constellation) whose knowledge is necessary to set the decision thresholds. The whole of these functions is often defined "synchronisation" so that said preamble is often defined "synchronisation preamble" and the sequence of symbols forming the same, is often called "synchronisation sequence". Moreover, from the way the preamble is received, it is possible to obtain information on the channel characteristics (channel estimate), thus enabling the channel equalisation.

The problem of identifying the type of modulation used for each packet ("burst") has been solved in many different ways, for instance creating complex frames of data collecting the bursts in groups having the same modulation type. In other cases, to increase flexibility, a bit sequence ("map") is periodically transmitted in each frame, and within the map the modulation type, used for all the bursts up to the next "map" is identified.

This technique proved to be unsatisfactory since it requires a high overhead and has vulnerability points. In fact, the "map" gives essential information to demodulate long burst sequences; therefore its incorrect reception causes the loss of a large quantity of data. Data frames also make the synchronisation slow and inefficient.

OBJECT AND SUMMARY OF THE INVENTION

An optimal solution to the above mentioned problems could consist in implementing self-consistent bursts, that is bursts transporting inside themselves also the information concerning the type of modulation used to code data. Such an arrangement is known e.g. from US-A-5 561 468 or US-A-5 289 476, after which the preamble of Claim 1 was patterned. However, said bursts should be characterised by a null additional overhead or in any case by a comparatively limited overhead, compared to conventional bursts, and by a high protection of the information concerning the modulation type, since this information is essential for the correct demodulation of transmitted data.

The core of the method of the invention consists in employing a specific sequence of symbols for the burst preamble in order to identify a corresponding type of modulation of useful data, thus entrusting the preamble with this new function of modulation identification in addition to the classical synchronisation and channel estimate functions. The method of the invention enables to transmit self-consistent bursts with a null, or limited to few symbols, additional overhead maintaining a high protection of the information concerning the type of modulation.

Another featuring element of the invention consists in employing a sequence very different from the other ones (having high decision distance) to distinguish the most robust modulation (having minimum number of levels, called also basic modulation) and sequences having lower distance to distinguish among the less robust modulations (multilevel modulations). Through this stratagem we succeed in limiting the overhead to the minimum extent without having to renounce to the soundness of the modulation recognition mechanism.

According to a preferred embodiment of the method of the present invention, these synchronisation sequences are CAZAC sequences, possibly cyclically transmitted in partially replicated manner and possibly, when necessary, transmitted together with some other symbols forming an auxiliary sequence.

The invention is defined in detail in claim 1. Other featuring elements and preferred embodiments of the invention are defined in the appended claims 2 through 10.

BRIEF DESCRIPTION OF DRAWINGS

The invention, together with further objects and advantages thereof, may be understood with reference to the following detailed description, taken in conjunction with the accompanying drawings, in which:

**Figure 1** shows the auto-correlation trend according to the phase shifting of a possible synchronisation sequence (the one that in the preferred embodiment described below, corresponds to the basic modulation QPSK);
**Figure 2** shows the trend of the cross-correlation according to the phase shifting between a possible synchronisation sequence corresponding, in the preferred embodiment, to the basic modulation QPSK and other two possible synchronisation sequences corresponding, also referring to the preferred embodiment described here after, to the two multilevel modulations, that is, 16QAM and 64QAM;
**Figure 3** shows the trend of the cross-correlation between two possible synchronisation sequences corresponding, in the preferred embodiment, to the multilevel modulations 16QAM and 64QAM.

DESCRIPTION OF SOME EMBODIMENTS OF THE INVENTION

To describe the invention more in detail, we consider the case in which the adaptive modulation is performed employing a basic modulation and a multilevel modulation, being the basic modulation the QPSK modulation and the multilevel modulation the 16QAM modulation. Of course, the invention can be conveniently applied also to modulations different from the mentioned ones.

Synchronisation sequences, largely used in practice, are the CAZAC sequences (Constant Amplitude, Zero Auto Correlation). They have the properties of being constant amplitude sequences, and the cyclic correlation between a CAZAC sequence and one of its replica, cyclically delayed, is maximum if the phase shifting is null (aligned sequences), while it is null in the contrary instance. These characteristics make CAZAC sequences particularly adequate to implement synchronisation and channel estimate preambles.

According to an aspect of the method according to the invention, a CAZAC sequence is employed to identify a corresponding modulation.

Typical CAZAC sequences, conveniently employable with the considered modulations, have 8 quaternary symbols (4 possible values for each symbol). There are only two sequences of this type (except for the variants cyclical in time and the variants given by sign change and cyclical rotations in the complex numbers plane):

| CAZAC1 | | | | | | | |
|---|---|---|---|---|---|---|---|
| 1 | -1 | j | 1 | 1 | 1 | j | -1 |

| CAZAC2 | | | | | | | |
|---|---|---|---|---|---|---|---|
| 1 | j | -1 | 1 | 1 | j | 1 | 1 |

in which 1, -1, j and -j denote the four different values that each transmitted symbol can assume, making precise reference to the symbols of the QPSK modulation.

According to a possible implementation, referred to hereafter, the synchronisation sequence, being made of quaternary symbols, is transmitted employing the basic modulation QPSK, irrespective of the type of modulation used for useful data.

The method according to the invention can be implemented using a CAZAC sequence, for example CAZAC1, to identify the basic modulation, which in the case illustrated is the QPSK modulation, while the other CAZAC2 to identify the multilevel modulation (16QAM). Therefore, if a burst containing the CAZAC1 sequence is received, it shall be QPSK demodulated, if on the contrary a burst containing the CAZAC2 sequence is received, it shall be 16QAM demodulated.

Since the 8-bit CAZAC sequences are already used at present as synchronisation sequences, the method of the present invention enables to transmit data in an adaptive modulation system, supplying the information on the type of modulation without any additional overhead.

The decision distance between the CAZAC1 and CAZAC 2 sequences is equal to

$$\sqrt{\left(\left(\sqrt{2}\right)^2 + (1)^2 + (1)^2 + 0 + 0 + (1)^2 + (1)^2 + \left(\sqrt{2}\right)^2\right)} = \sqrt{8}$$

letting 1 be the minimum decision distance between two QPSK symbols. This means that the information of which of the two sequences has been transmitted, is protected with a 9.03dB gain compared to the single bit transmitted at QPSK.

In order to improve the synchronisation properties, these CAZAC sequences can be cyclically repeated, in full or partially. A reasonable compromise between overhead and synchronisation efficiency can be reached transmitting the sequence in a partially replicated cyclical manner, that is, transmitting the last bits of the sequence before the sequence itself, and the first bits of the CAZAC sequence after it.

A preferred mode to transmit CAZAC sequences, to distinguish the basic modulation from a multilevel modulation, in case partially replicated CAZAC sequences are used, is shown in the following table:

**Table 1**

| Basic Mod. | 1 | j | -1 | 1 | -1 | j | 1 | 1 | 1 | j | -1 | 1 | -1 | j |
|---|---|---|---|---|---|---|---|---|---|---|---|---|---|---|
| Multilevel Mod. | j | 1 | 1 | -1 | j | -1 | 1 | 1 | j | 1 | 1 | -1 | j | -1 |

In this case the CAZAC sequences are preceded by their last three bits and are followed by the relevant first three bits. Of course, it is not absolutely necessary that the number of bits preceding the CAZAC sequence is equal to the number of bits following it ("symmetric partial replica"), since it is always possible to transmit the sequence in cyclical manner partially replicated preceded by a given number of bits and followed by a different number of bits ("non symmetric partial replica"); it is also possible to start from any variant of each one of the two CAZAC sequences.

The use of sequences in Table 1 is preferred, since their quadratic decision distance is equal to the double of that existing between CAZAC1 and CAZAC2 sequences, without doubling the length of the synchronisation sequence.

The decision distance between the two sequences indicated in Table 1 is $\sqrt{8 \cdot 2}$, equal to a gain of 12.04dB, sufficient to guarantee in all the cases having practical interest a negligible probability of erroneous recognition of the type of modulation adopted.

In the practice, it often happens that the adaptive modulation is made employing more than one multilevel modulation, so the problem arises to distinguish also multilevel modulations among them. In this case, if we have availability of as many CAZAC sequences as the number of used modulations, the method according to the invention can be applied, transmitting a CAZAC sequence, possibly replicated, for a corresponding type of modulation.

With a stratagem, it is possible to continue using the well-known 8 quaternary symbol CAZAC sequences, limiting the additional overhead and assuring a negligible probability of wrong recognition among the different synchronisation sequences.

According to a further embodiment of the invention, one of the two CAZAC sequences is employed, possibly replicated, for instance CAZAC1, to identify the basic modulation, while the other one CAZAC2 is employed to identify all the multilevel modulations. To distinguish the different multilevel modulations among them, together with the CAZAC2 sequence an auxiliary sequence made up of a given number of symbols is transmitted. In this way, if the CAZAC2 sequence is recognised in the reception phase, it means that data are coded with a multilevel modulation; identifying the auxiliary sequence, the used multilevel modulation is identified.

This last embodiment of the invention results being conveniently applicable since it is sufficient to transmit auxiliary sequences of a few bits to assure that the recognition of the type of modulation is made in a reliable manner. In fact, multilevel modulations are used in practice only if the channel shows favourable transmission characteristics: in these conditions, two different synchronisation sequences can be reliably discriminated even if they differ only in a few symbols.

In order to more clearly describe this further aspect of the invention, a practical case is considered below in which the adaptive modulation is made employing three different modulations: long range, medium range and short range. For example, we assume that the long-range modulation (basic modulation) is the QPSK modulation and the medium and short-range multilevel modulations are 16QAM and 64QAM modulations, respectively.

A CAZAC sequence, for instance CAZAC1, replicated as indicated in Table 1, is used to identify the long range modulation QPSK, while the other one CAZAC2, replicated in the same way, identifies all the two medium and short range modulations. 16QAM and 64QAM modulations are discriminated transmitting, after the replicated CAZAC2 sequence, a corresponding auxiliary sequence, made for instance of two symbols.

In the described case, the synchronisation sequence corresponding to the QPSK modulation shall be at a very high decision distance from the sequences corresponding to 16QAM and 64QAM modulations which, in turn, shall be different but at a lower reciprocal decision distance.

To discriminate the basic modulation from multilevel modulations, the two different CAZAC sequences are used because the basic modulation is employed when the channel transmission characteristics are comparatively unfavourable, so that it is opportune that the corresponding synchronisation sequence is largely different from those relating to multilevel modulations, in order to have a reduced probability of wrong recognition.

On the contrary, if a multilevel modulation is being used, then the channel shows favourable transmission characteristics so that, to discriminate the multilevel medium range modulation 16QAM from the short range one 64QAM, it is sufficient to transmit an auxiliary sequence of two symbols only, in addition to the CAZAC2 sequence. In this way, selecting the two symbols of the auxiliary sequence in order to assure the maximum distance, synchronisation sequences are obtained, corresponding to the 16QAM and 64QAM modulations, which are at a decision distance

$$\sqrt{\left(\left(\sqrt{2}\right)^2 + \left(\sqrt{2}\right)^2\right)} = 2$$ times the minimum decision distance between two QPSK symbols, with a 6.02dB gain, which is more than enough to reliably discriminate the two modulations.

In fact, it is possible to demonstrate that, being the preamble transmitted with a QPSK modulation, if we are operating in conditions that enable to use at least the 16QAM modulation, we have 9.54dB margin at equal peak power between the 16QAM modulation and the QPSK one.

Transmitting only two auxiliary symbols and selecting them in order that they are at the maximum decision distance, a total distance of 15.56dB is then obtained.

It is also possible to transmit an auxiliary sequence consisting of one bit only or of at least three bits instead of two, but in the first case the distance between the two synchronisation sequences would not be sufficient to assure a limited probability of erroneous recognition, while in the second case, the additional overhead would be uselessly increased.

An example of sequences obtained according to this technique is shown in table 2:

**Table 2**

| QPSK | 1 | j | -1 | 1 | -1 | j | 1 | 1 | 1 | j | -1 | 1 | -1 | j | j | -j |
|---|---|---|---|---|---|---|---|---|---|---|---|---|---|---|---|---|
| 16QAM | j | 1 | 1 | -1 | j | -1 | 1 | 1 | j | 1 | 1 | -1 | j | -1 | 1 | -1 |
| 64QAM | j | 1 | 1 | -1 | j | -1 | 1 | 1 | j | 1 | 1 | -1 | j | -1 | -1 | 1 |

The addition of other two bits additionally increases the recognition distance of the QPSK modulation from the other ones.

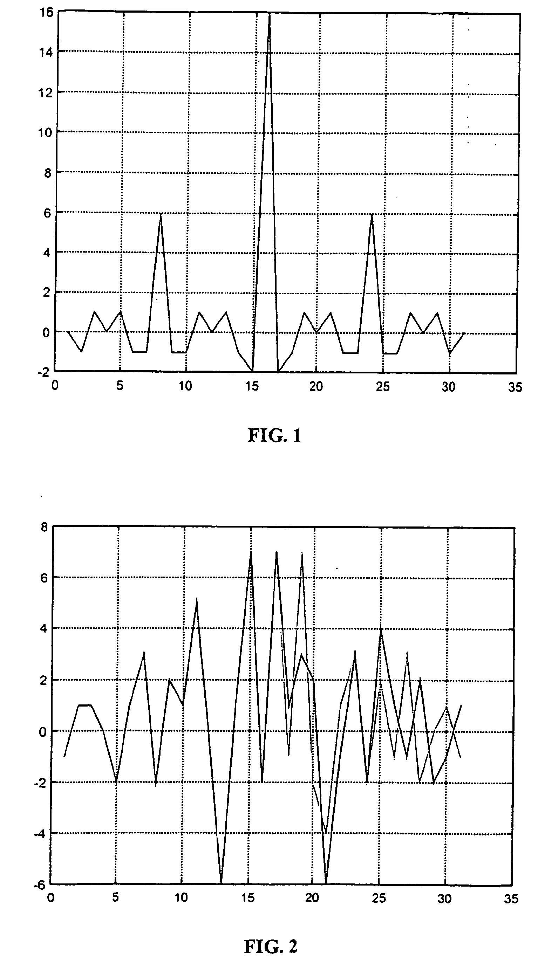

Fig. 1 shows the trend of the non-cyclic auto-correlation of the sequence relevant to the basic modulation QPSK, indicated in table 2 as a function of the phase shifting. As it can be noticed, when the phase shifting is null we have a maximum amplitude peak that enables the synchronisation (synchronisation peak).

The trends of the cross-correlation among the synchronisation sequences corresponding to the basic modulation and to 64QAM and 16QAM modulations are shown in Fig. 2. The possibility to discriminate in a reliable manner between the sequences relevant to the QPSK and to the other two modulations is assured by the fact that the cross-correlation does not show amplitude peaks that can be compared with the synchronisation peak of Fig. 1.

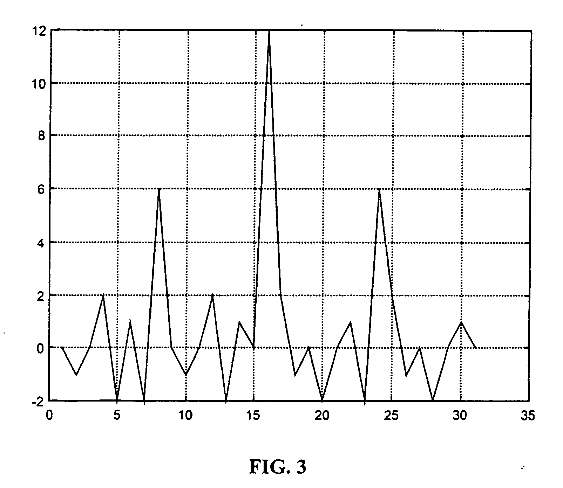

Finally, Fig. 3 shows the trend of the cross-correlation between the sequences of Table 2 relevant to multilevel modulations, as a function of the phase shifting. In this case, we can notice a peak having comparatively high amplitude when the two sequences are aligned, since they differ only in the last two symbols. Even if the decision distance between the two sequences is limited, it is however sufficient to discriminate them in a reliable manner.

In the disclosed case of adaptive modulation, the synchronisation sequences of Table 2 enable to discriminate with a 12dB gain (the gain is defined in terms of decision distance compared to a single information bit transmitted with QPSK and gray coding, at equal error probability on the transmitted information unit, for transmitted information it is intended the binary information enabling to distinguish the basic modulation from other modulations) the basic modulation (QPSK) from the other ones, and the multilevel modulations (16QAM and 64QAM) between them with a 15.56dB gain (the gain is defined in terms of decision distance compared to a single information bit transmitted with 16QAM, and gray coding, at equal error probability on the transmitted information unit, for information transmitted it is intended the binary information enabling to distinguish the 16QAM modulation from the 64QAM modulation). The overhead increase due to the fact that 16 bit synchronisation sequences are used instead of 14-bit ones, which are generally used in similar cases to assure the synchronisation and the channel estimate, turns out to be within acceptable limits.

Therefore, while a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

1. Non-continuous or burst transmission method, in adaptive modulation of data from a transmitting station to a receiving station through a transmission system,
   the method including

   • organising data in standard packets, called bursts, consisting of a set of data bits and of a preamble containing a sequence of synchronisation symbols called synchronisation sequence,
   • transmitting said standard packets towards the destination station,

      - wherein the method includes

   • demodulating each standard packet according to a particular modulation of data contained in the same, identified by a corresponding synchronisation sequence contained in the relevant packet preamble,

   **characterized in that**:

   said adaptive modulation is made using a basic modulation and a plurality of multilevel modulations,

      • each synchronisation sequence of bursts coded with said basic modulation include a first sequence;
      • each synchronisation sequence of bursts coded with a multilevel modulation include a second sequence, at high decision distance from the first one, followed by a particular auxiliary sequence of a given number of symbols identifying a corresponding multilevel modulation.

2. The method according to claim 1 in which
   said synchronisation sequences include Constant Amplitude - Zero Auto Correlation, CAZAC, sequences.

3. The method of claim 2 in which
   each symbol of said CAZAC sequences can assume four different values and said CAZAC sequences are made of 8 symbols.

4. The method according to claims 2 or 3 in which
   said synchronisation sequences include CAZAC sequences partially replicated in cyclical manner.

5. The method according to any claim 2 to 4 **characterised in that**

      - each synchronisation sequence of bursts coded with said basic modulation include a first CAZAC sequence;
      - each synchronisation sequence of bursts coded with a multilevel modulation include a second CAZAC sequence followed by a particular auxiliary sequence of a given number of symbols identifying a corresponding multilevel modulation.

6. The method of claim 5 in which
   said adaptive modulation is made using a basic modulation for long range transmissions and two multilevel modulations for medium and short range transmissions, respectively, **characterised in that**
   said auxiliary sequences are sequences consisting of two quaternary symbols and are at the maximum decision distance.

7. The method of claim 6 in which

said basic modulation is a QPSK or 4QAM modulation,
said medium and short-range modulations are a 16QAM modulation and 64QAM modulation, respectively.

8.   The method of claim 7 in which
said synchronisation sequences, that include replicated CAZAC sequences and additional sequences are as follows:

   • QPSK:1 j -1 1 -1 j 1 1 1 j -1 1 -1 j j -j
   • 16QAM: j 1 1 -1 j -1 1 1 j 1 1 -1 j -1 1 -1
   • 64QAM:j 11 -1 j -1 1 1 j 1 1 -1 j -1 -1 1

9.   The method of claim 4 in which
said cyclical replica is such to maximise the decision distance between two of the above mentioned synchronisation sequences, once the length of sequences is defined.

10.   The method according to the previous claims in which
said synchronisation sequence is transmitted using the basic modulation irrespective of the modulation used for data.


**Patentansprüche**

1.   Nicht kontinuierliches oder paketweises Übertragungsverfahren mit adaptiver Modulation der Daten von einer Sendestation zu einer Empfangsstation über ein Übertragungssystem, wobei das Verfahren folgende Schritte umfasst:

   - Organisation der Daten in Standardpaketen, die als Signalpakete bezeichnet werden, und die aus einem Satz von Datenbits und aus einer Präambel mit einer Folge von Synchronisationssymbolen bestehen, die als Synchronisationsfolge bezeichnet wird,
   - Übertragen der Standardpakete zur Zielstation,

wobei das Verfahren folgenden Schritt umfasst:

   - Demodulieren jedes Standardpakets gemäß einer bestimmten Modulation von Daten, die in diesem enthalten sind, wie von einer entsprechenden Synchronisationsfolge identifiziert, die in der relevanten Paketpräambel enthalten ist,

   **dadurch gekennzeichnet, dass**
die adaptive Modulation mittels einer Basismodulation und einer Mehrzahl von mehrstufigen Modulationen erfolgt, wobei

   - jede Synchronisationsfolge von Signalpaketen, die mit der Basismodulation codiert sind, eine erste Folge enthält;
   - jede Synchronisationsfolge von Signalpaketen, die mit einer mehrstufigen Modulation codiert ist, eine zweite Folge umfasst, die einen hohen Entscheidungsabstand zur ersten Folge aufweist, gefolgt von einer bestimmten Zusatzfolge aus einer gegebenen Anzahl von Symbolen zur Identifizierung einer entsprechenden mehrstufigen Modulation.

2.   Verfahren nach Anspruch 1, worin die Synchronisationsfolgen CAZAC-Folgen, also Folgen mit konstanter Amplitude und null Autokorrelation, umfassen.

3.   Verfahren nach Anspruch 2, worin jedes Symbol der CAZAC-Folgen vier unterschiedliche Werte annehmen kann, und wobei die CAZAC-Folgen aus 8 Symbolen bestehen.

4.   Verfahren nach Anspruch 2 oder 3, worin die Synchronisationsfolgen CAZAC-Folgen umfassen, die in zyklischer Weise teilrepliziert werden.

5.   Verfahren nach einem der Ansprüche 2 bis 4, **dadurch gekennzeichnet, dass**:

   - jede Synchronisationsfolge von Signalpaketen, die mit der Basismodulation codiert sind, eine erste CAZAC-Folge enthält;

- jede Synchronisationsfolge von Signalpaketen, die mit einer mehrstufigen Modulation codiert sind, eine zweite CAZAC-Folge umfasst, gefolgt von einer bestimmten Zusatzfolge aus einer gegebenen Anzahl von Symbolen zur Identifizierung einer entsprechenden mehrstufigen Modulation.

**6.** Verfahren nach Anspruch 5, worin die adaptive Modulation unter Verwendung von einer Basismodulation für Übertragungen über große Entfernungen und von zwei mehrstufigen Modulationen für Übertragungen über mittlere bzw. kurze Entfernungen aufgebaut ist, **dadurch gekennzeichnet, dass** die Zusatzfolgen Folgen sind, die aus zwei quartären Symbolen bestehen und zueinander mit dem maximalen Entscheidungsabstand beabstandet sind.

**7.** Verfahren nach Anspruch 6, worin die Basismodulation eine QPSK- oder 4QAM-Modulation ist, und wobei die Modulationen für mittlere und kurze Entfernungen eine 16QAM-Modulation bzw. eine 64QAM-Modulation sind.

**8.** Verfahren nach Anspruch 7, worin die Synchronisationsfolgen, die replizierte CAZAC-Folgen und Zusatzfolgen enthalten, wie folgt sind:

- QPSK: 1 j -1 1 -1 j 1 1 1 j -1 1 -1 j j -j
- 16QAM: j 1 1 -1 j -1 1 1 j 1 1 -1 j -1 1 -1
- 64QAM: j 1 1 -1 j -1 1 1 j 1 1 -1 j -1 -1 1

**9.** Verfahren nach Anspruch 4, worin das zyklische Replizieren derart erfolgt, dass der Entscheidungsabstand zwischen zwei der zuvor genannten Synchronisationsfolgen maximiert wird, sobald die Länge der Folge definiert ist.

**10.** Verfahren nach den vorausgehenden Ansprüchen, worin die Synchronisationsfolge anhand der Basismodulation unabhängig von der für Daten verwendeten Modulation übertragen wird.

## Revendications

**1.** Procédé de transmission non continue ou par salves, en modulation adaptative de données, d'une station émettrice vers une station réceptrice par le biais d'un système de transmission, le procédé incluant

• l'organisation de données en paquets standards, appelés salves, formés d'un ensemble de bits de données et d'un préambule contenant une séquence de symboles de synchronisation appelée séquence de synchronisation,
• la transmission desdits paquets standards vers la station destinataire,

- dans lequel le procédé inclut

• la démodulation de chaque paquet standard selon une modulation particulière des données contenues dans le paquet, identifiée par une séquence de synchronisation correspondante contenue dans le préambule du paquet correspondant,

**caractérisé en ce que** :

ladite modulation adaptative est réalisée en utilisant une modulation de base et une pluralité de modulations multiniveaux,

• chaque séquence de salves de synchronisation codée avec ladite modulation de base inclut une première séquence ;
• chaque séquence de synchronisation de salves codées avec une modulation multiniveaux inclut une seconde séquence, située à une distance de décision élevée de la première, suivie d'une séquence auxiliaire particulière d'un nombre donné de symboles identifiant une modulation multiniveaux correspondante.

**2.** Procédé selon la revendication 1, dans lequel lesdites séquences de synchronisation incluent des séquences CAZAC à amplitude constante et autocorrélation nulle.

**3.** Procédé selon la revendication 2, dans lequel chaque symbole desdites séquences CAZAC peut prendre quatre valeurs différentes et lesdites séquences CAZAC sont formées de 8 symboles.

**4.** Procédé selon les revendications 2 ou 3, dans lequel lesdites séquences de synchronisation incluent des séquences CAZAC partiellement répliquées de manière cyclique.

**5.** Procédé selon l'une quelconque des revendications 2 à 4, **caractérisé en ce que**

- chaque séquence de synchronisation de salves codées avec ladite modulation de base inclut une première séquence CAZAC ;
- chaque séquence de synchronisation de salves codées avec une modulation multiniveaux inclut une seconde séquence CAZAC suivie d'une séquence auxiliaire particulière d'un nombre donné de symboles identifiant une modulation multiniveaux correspondante.

**6.** Procédé selon la revendication 5, dans lequel ladite modulation adaptative est réalisée en utilisant une modulation de base pour des transmissions de longue portée et deux modulations multiniveaux pour des transmissions de moyenne et courte portée, respectivement, **caractérisé en ce que** lesdites séquences auxiliaires sont des séquences formées de deux symboles quaternaires et sont situées à la distance de décision maximum.

**7.** Procédé selon la revendication 6, dans lequel ladite modulation de base est une modulation QPSK ou 4QAM, lesdites modulations de moyenne et courte portée sont une modulation 16QAM et une modulation 64QAM respectivement.

**8.** Procédé selon la revendication 7, dans lequel lesdites séquences de synchronisation, qui incluent des séquences CAZAC répliquées et des séquences additionnelles, se présentent comme suit :

• QPSK : 1 j -1 1 -1 j 1 1 j -1 1 -1 j j -j
• 16QAM :j 1 1 -1 j -1 1 1 j 1 1 -1 j -1 1-1
• 64QAM :j 1 1 -1 j j -1 1 1 j 1 1 -1 j -1 -1 1

**9.** Procédé selon la revendication 4, dans lequel ladite réplique cyclique est telle que la distance de décision entre deux des séquences de synchronisation mentionnées ci-dessus est maximisée une fois que la longueur des séquences est définie.

**10.** Procédé selon les revendications précédentes, dans lequel ladite séquence de synchronisation est transmise en utilisant la modulation de base quelle que soit la modulation utilisée pour les données.

**FIG. 1**

**FIG. 2**

**FIG. 3**